Europäisches Patentamt

European Patent Office

Office européen des brevets

(11) Veröffentlichungsnummer: **0 518 329 A2**

## (12) EUROPÄISCHE PATENTANMELDUNG

(21) Anmeldenummer: **92109850.5**

(22) Anmeldetag: **11.06.92**

(51) Int. Cl.5: **H04B 5/00**, G06K 7/08

(30) Priorität: **13.06.91 DE 4119553**

(43) Veröffentlichungstag der Anmeldung:
**16.12.92 Patentblatt 92/51**

(84) Benannte Vertragsstaaten:
**DE FR GB IT**

(71) Anmelder: **SIEMENS AKTIENGESELLSCHAFT**
**Wittelsbacherplatz 2**
**W-8000 München 2(DE)**

(72) Erfinder: **Donig, Günter, Dipl.-Ing.**
**Zeisigstrasse 2**
**W-8012 Ottobrunn(DE)**
Erfinder: **Scheckel, Bruno, Dipl.-Ing.**
**V.-Feury-Strasse 5**
**W-8017 Ebersberg(DE)**
Erfinder: **Schön, Karl-Reinhard, Dipl.-Ing.**
**Stephansplatz 1**
**W-8000 München 2(DE)**

(54) **Schaltungsanordnung zur kontaktlosen Energie- und Datenübertragung mit Hilfe von Wechselspannung und induktivem Übertrager.**

(57) Bei Systemen zur Übertragung von Energie und Informationen mit Hilfe einer Wechselspannung unter Verwendung von induktiven Übertragern wird verhindert, daß Flankenunstetigkeiten des übertragenen Wechselsignales auf der Sekundärseite, die beispielsweise durch die eigene Resonanz des Sekundärkreises bedingt sind, zu einer Fehlinformation in der Auswerteschaltung führen. Das wird erfindungsgemäß durch symmetrisches Auskoppeln eines übertragenen Signales an beiden Anschlußklemmen (ALs und BLs) einer Sekundärinduktivität (Ls) des induktiven Übertragers und durch Weiterverarbeiten des hier ausgekoppelten Signales in einer Schaltungsanordnung (DV) mit symmetrischem Signaleingang und Gleichtaktunterdrückung erreicht.

FIG 1

Die Erfindung betrifft eine Schaltungsanordnung zur kontaktlosen Energie- und Datenübertragung mit Hilfe von Wechselspannung und induktivem Übertrager nach dem Oberbegriff des Patentanspruches 1.

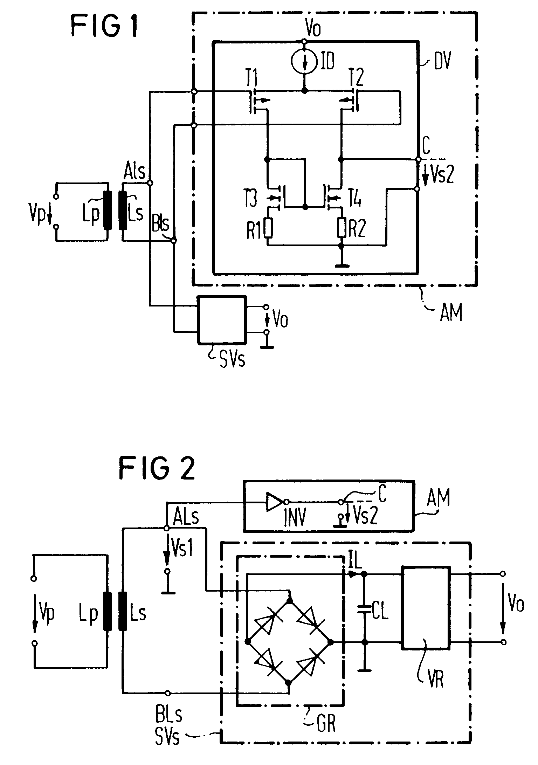

Solche Schaltungsanordnungen sind bekannt und unter anderem in der DE 34 47 560 C2 (US 4,697,183 A) und in der europäischen Patentanmeldung Nr. 90113587.1 (US-Patentanmeldung Serial-No. 590,088) beschrieben. Auch in dem Laboratory Report No. HTV8902/HDP8902, "C2-Card" von Reiner Imjela von Philips Components, datiert am 11.10.1989, veröffentlicht als Laborbericht C2-Card im Januar 1990 von Valvo/Philips Bauelemente, insbesondere in Figur 4 auf Seite 27 in Verbindung mit Figur 2 auf Seite 25 ist eine solche Schaltungsanordnung im Blockschaltbild gezeigt.

Die vorgenannten Dokumente beschreiben jeweils eine Schaltungsanordnung zur unidirektionalen Energie- und zur bidirektionalen Datenübertragung. Die zu übertragenden Signale sind Digitalsignale, die moduliert werden, übertragen werden und demoduliert werden. Als Modulationsverfahrens ist bei den beschriebenen Schaltungsanordnungen Phasenmodulation und Amplitudenmodulation verwendet. Es ist aber auch Frequenzmodulation möglich. Da Digitalsignale übertragen werden, wird jeweils bei der Modulation zwischen zwei oder mehreren Zuständen umgeschaltet.

Die beschriebenen Schaltungsanordnungen sehen jeweils zwei Übertrager vor. Prinzipiell würde jedoch jeweils ein Übertrager genügen.

Figur 2 zeigt das Funktionsschaltbild der Minimalkonfiguration einer Schaltungsanordnung zur kontaktlosen unidirektionalen Energie- und bidirektionalen Datenübertragung mit Hilfe von Wechselspannung und induktivem Übertrager nach dem Stande der Technik. Modulatoren und Demodulatoren sowie die Einkopplung von Daten sind hierbei nicht gezeigt. Durch die Richtung der Energieübertragung wird eine Primärseite festgelegt, deren Bezugszeichen mit p gekennzeichnet sind und eine Sekundärseite, deren Bezugszeichen mit s gekennzeichnet sind.

Die Schaltungsanordnung enthält eine Primärinduktivität Lp, die mit einer Wechselspannung Vp beaufschlagt ist. Diese Primärinduktivität Lp bildet mit einer Sekundärinduktivität Ls einen Übertrager. Die Sekundärinduktivität weist zwei Anschlußklemmen ALs und BLs auf, an die eine Spannungsversorgungsschaltung SVs angeschlossen ist. Diese Spannungsversorgungsschaltung SVs beinhaltet üblicherweise einen Gleichrichter GR, eine Kapazität CL zum Glätten der gleichgerichteten Spannung und einen Spannungsregler VR und wandelt die an den Anschlußklemmen ALs und BLs bereitgestellte Wechselspannung in eine Gleichspannung Vo zur Versorgung nachgeschalteter Schaltungsteile um.

Hierbei fließt vom Gleichrichter DR ein Ladestrom IL zu der Kapazität C und zum Eingang des Spannungsreglers VR. Bei bekannten Schaltungsanordnungen wird das Signal auf der Sekundärseite entweder an der Anschlußklemme ALs oder an der Anschlußklemme BLs ausgekoppelt, indem eine dieser beiden Anschlußklemmen an den Eingang einer Auswerteschaltung, als deren Eingangsstufe meist eine Verstärkeranordnung vorgesehen ist. Wenn das auszukoppelnde Signal phasen- oder frequenzmoduliert ist, dient diese Verstärkeranordnung dem Unterdrücken bzw. Ausgleichen von Amplitudenschwankungen. In diesem Falle kann beispielsweise eine einfache Invertierschaltung INV vorgesehen sein.

Bei der Übertragung einer sinusförmigen Wechselspannung Vp von der Primärinduktivität Lp zur Sekundärinduktivität Ls erhält man sowohl an der Anschlußklemme ALs als auch an der Anschlußklemme BLs ein Signal mit Flankenunstetigkeit.

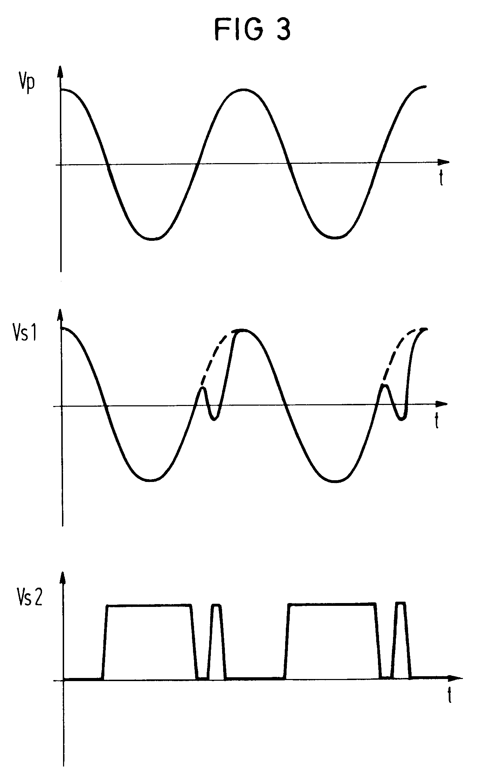

Figur 3 zeigt in schematischer Darstellung den Verlauf der Primärspannung Vp und den daraus resultierenden Signalverlauf Vs1 an der Anschlußklemme ALs der Sekundärinduktivität Ls. Außerdem zeigt Figur 3 den Verlauf des Signales Vs2, das von einer durch einen Invertierer INV realisierten Verstärkeranordnung bereitgestellt wird, wenn diese mit dem an der Anschlußklemme ALs bereitgestellten Signal Vs1 angesteuert wird.

Bei dem Signal Vs1 ist hierbei eine Unstetigkeit der steigenden Flanke zu erkennen. Der Sekundärkreis beschriebener Schaltungsanordnungen bildet einen Resonanzkreis, dessen induktiver Anteil vornehmlich durch die Sekundärinduktivität Ls bestimmt ist und dessen kapazitiver Anteil vornehmlich durch die zum Glätten der Gleichspannung vorgesehene Kapazität CL festgelegt wird. Die Flankenunstetigkeit des Signales Vs1 in Figur 3 ist auf eine Eigenresonanz dieses Resonanzkreises im Nulldurchgang des Ladestromes IL zurückzuführen.

Bei Schaltungen nach dem Stande der Technik wird der Sekundärinduktivität Ls nicht nur von einer Spannungsversorgungsschaltung SVs Energie entnommen, sondern es wird auch eine Auswertung der Frequenz der übertragenen Wechselspannung vorgenommen, wobei entweder die Frequenz- oder die Phaseninformation ausgewertet wird. Eine unsymmetrische Auskopplung nach dem Stande der Technik, wie in Figur 2 gezeigt, führt hierbei zu Fehlinformationen, weil eine Verstärkeranordnung, die zu einer Auswerteschaltung AM gehört, unter Umständen auf der unstetigen Flanke dreimal schaltet. Das kann gegebenenfalls zu einer Verfälschung der Phasen- bzw. Frequenzinformation führen.

Aufgabe der Erfindung ist es, eine gattungsgemäße Schaltungsanordnung bereitzustellen, bei der solche systemimanente Fehler nicht zu einer Fehlinformation führen.

Diese Aufgabe wird gelöst durch eine Schaltungsanordnung nach dem Patentanspruch 1.

Günstige Ausgestaltungsformen sind Gegenstand von Unteransprüchen.

Die Erfindung geht von der zusätzlichen Erkenntnis aus, daß die in Figur 3 gezeigten, übertragungssystembedingten Flankenunstetigkeiten an beiden Anschlußklemmen ALs und BLs der Sekundärinduktivität Ls gleichzeitig auftreten. Durch symmetrisches Auskoppeln eines übertragenen Signales an beiden Anschlußklemmen ALs und BLs der Sekundärinduktivität Ls und durch Weiterverarbeiten in einer Schaltungsanordnung DV mit symmetrischem Signaleingang und Gleichtaktunterdrückung ist es in erfindungsgemäßen Schaltungsanordnungen möglich, digitale stetige Signale zu erzeugen, indem die übertragungssystembedingten Flankenunstetigkeiten unterdrückt werden.

Als Eingangsstufe DV einer Auswerteschaltung AM zum Verarbeiten symmetrischer Signale mit Gleichtaktunterdrückung bieten sich bekannte Differenzverstärkerstufen an, wie sie z.B in Tietze/Schenk, "Halbleiter-Schaltungstechnik", 5. Aufl., 1980 auf Seite 59 und Seite 89 beschrieben sind.

Insbesondere sind hierzu die Eingangsstufen von zweistufigen Operationsverstärkern besonders geeignet, wie sie u.a. in dem Artikel "MOS Operational Amplifier Design - A Tutorial Overview" von P.R. Gray und Robert G. Meyer, IEEE Journal of Solid State Circuits, Vol. SC-17, No. 6, Dec. 1982 auf den Seiten 969 bis 982 beschrieben sind. Insbesondere die Figuren 2, 4 und 19 zeigen solche zweistufigen Operationsverstärker, deren Eingangsstufe ein geeigneter Differenzverstärker ist. Hierbei werden sowohl in Bipolartechnik, als auch in NMOS und in CMOS realisierte Differenzverstärker gezeigt.

In Tietze/Schenk, "Halbleiter-Schaltungstechnik", 9. Aufl. 1989 wird auf Seiten 142 und 143, insb. in Abb. 7.21 ein zweistufiger CMOS-Operationsverstärker mit geeignetem Differenzverstärkereingang gezeigt. Die Eingangsstufe dieses CMOS-Operationsverstärkers ist beispielhaft in der nachstehend beschriebenen Figur 1 dargestellt.

Im folgenden wird die Erfindung anhand der Figur 1 näher erläutert.

Figur 1 zeigt eine erfindungsgemäße Schaltungsanordnung zur kontaktlosen Energie- und Datenübertragung mit Hilfe von Wechselspannung, bestehend aus einem Übertrager mit einer Primärinduktivität Lp, die mit einer Wechselspannung Vp beaufschlagt ist. Außerdem ist eine Sekundärinduktivität Ls gezeigt mit einer ersten Anschlußklemme ALs und einer zweiten Anschlußklemme BLs. Die Anschlußklemme ALs ist sowohl an eine Eingangsklemme einer Spannungsversorgungsschaltung SVs geschaltet als auch an eine Eingangsklemme eines symmetrischen Signaleinganges einer Auswerteschaltung AM. Die Anschlußklemme BLs ist sowohl an einen weiteren Eingang der Spannungsversorgungsschaltung SVs geschaltet, als auch an eine weitere Anschlußklemme des symmetrischen Einganges der Auswerteschaltung AM. Die Spannungsversorgungsschaltung SVs stellt an ihrem Ausgang eine gleichgerichtete Versorgungsspannung Vo bereit. Die Auswerteschaltung AM weist eine Eingangsstufe DV mit einem symmetrischen Signaleingang auf. Die Differenzverstärkerstufe DV enthält in dem gezeigten Ausführungsbeispiel eine mögliche Ausführungsform einer Differenzverstärkerschaltung in CMOS-Technik. Der eigentliche Differenzverstärker besteht hierbei aus einem ersten p-Kanal-Enhancement-MOSFET T1 und einem zweiten p-Kanal-Enhancement-MOSFET T3, deren Sourceanschlüsse zusammengeschaltet sind und über eine Stromquelle ID an ein Versorgungspotential Vo geschaltet sind. Der Gateanschluß des Transistors T1 ist mit der Anschlußklemme ALs der Sekundärinduktivität Ls verbunden und bildet eine Eingangsklemme des Differenzverstärkers, der Gateanschluß des Transistors T2 ist mit der Anschlußklemme BLs zusammengeschaltet und bildet die andere Eingangsklemme des Differenzverstärkers. Die Drainanschlüsse der Transistoren T1 und T2 sind über Schaltmittel an ein weiteres Versorgungspotential Masse geschaltet und dienen als Signalausgang dieser Differenzverstärkergrundschaltung aus den Transistoren T1 und T2. Die Flanken des Ausgangssignales dieser Schaltung werden dadurch verbessert, daß die Sourceanschlüsse der Transistoren T1 und T2 über eine Stromspiegelschaltung, gebildet aus einem Transistor T3 und einem Transistor T4 sowie aus Widerständen R1 und R2, gegen das Versorgungspotential Masse geschaltet sind. In dem gezeigten Ausführungsbeispiel sind die Transistoren T3 und T4 durch n-Kanal-Enhancement-MOSFET realisiert, deren Gateanschlüsse gemeinsam mit dem Drainanschluß des Transistors T3 verbunden sind. Der Drainanschluß des Transistors T3 ist mit dem Drainanschluß des Transistors T1 verbunden. Der Drainanschluß des Transistors T4 bildet gemeinsam mit dem Drainanschluß des Transistors T2 einen unsymmetrischen Signalausgang C dieser Eingangsstufe. Der Sourceanschluß des Transistors T3 ist über einen Widerstand R1 an das Versorgungspotential Masse geschaltet und der Sourceanschluß des Transistors T4 ist über einen Widerstand R2 an das Versorgungspotential Masse angeschlossen. Der Signalausgang C der Eingangsstufe DV stellt ein digitales stetiges Signal Vs2 zur Verfügung, das in einer nichtdargestellten Demodulatorschaltung ausgewertet wird. Das von der Eingangsstufe DV am Ausgang C bereitgestellte Signal ist ein Strom, der gebildet wird aus der Differenz des Drainstromes des Transistors T1 und des Drainstromes des Transistors T2.

Die im Ausführungsbeispiel der Figur 1 gezeigte Schaltung der Eingangsstufe DV der Auswerteschaltung AM kann auch in Bipolartechnik realisiert werden. Die entsprechende Schaltung ist Tietze/Schenk, "Halbleiter-Schaltungstechnik", 5. Aufl. 1980, S. 111 bis 112, insb. dem Prinzipschaltbild des integrierten Operationsverstärkers µA741, zu entnehmen.

## Patentansprüche

1. Schaltungsanordnung zur kontaktlosen Energie- und Datenübertragung mit Hilfe von Wechselspannung, bestehend aus mindestens einem Übertrager mit Primärinduktivität (Lp) und Sekundärinduktivität (Ls), wobei die Sekundärinduktivität (Ls) zwei Anschlußklemmen (ALs und BLs) aufweist, außerdem bestehend aus einer Spannungsversorgungsschaltung (SVs) mit einem Gleichrichter (GR), die speiseseitig mit den beiden Anschlußklemmen (ALs und BLs) der Sekundärinduktivität (Ls) verbunden sind und bestehend aus einer Auswerteschaltung (AM), die eingangsseitig mit einer der Anschlußklemmen (ALs oder BLs) der Sekundärinduktivität verbunden ist,
   **dadurch gekennzeichnet,**
   daß mindestens eine Eingangsstufe der Auswerteschaltung (AM) zum Verarbeiten symmetrischer Signale mit Gleichtaktunterdrückung geeignet ist und daß zum symmetrischen Auskoppeln der mit Hilfe des Übertragers übertragenen Signale beide Anschlußklemmen (ALs und BLs) der Sekundärinduktivität (Ls) mit entsprechenden Eingangsklemmen der Auswerteschaltung (AM) verbunden sind.

2. Schaltungsanordnung nach Anspruch 1,
   **dadurch gekennzeichnet,**
   daß die Auswerteschaltung (AM) eine Differenzverstärkerstufe (DV) enthält, deren symmetrischer Eingang mit dem an den Anschlußklemmen (ALs und BLs) ausgekoppelten Signal beaufschlagt ist.

3. Schaltungsanordnung nach Anspruch 2,
   **dadurch gekennzeichnet,**
   daß die Differenzverstärkerstufe (DV) in Form einer in üblichen zweistufigen Operationsverstärkern verwendeten Eingangsstufe realisiert ist.

4. Schaltungsanordnung nach einem der vorhergehenden Ansprüche,
   **dadurch gekennzeichnet,**
   daß die Differenzverstärkerstufe in CMOS-Technik realisiert ist.

5. Schaltungsanordnung nach einem der vorhergehenden Ansprüche,
   **dadurch gekennzeichnet,**
   daß das mit Hilfe des Übertragers zu übertragende Signal ein phasenmoduliertes Signal ist und daß die Auswerteschaltung (AM) einen Phasendetektor enthält mit einer Differenzverstärkerstufe (DV) als Eingangsstufe.

6. Schaltungsanordnung nach einem der vorhergehenden Ansprüche,
   **dadurch gekennzeichnet,**
   daß zwei Übertrager vorgesehen sind, daß einer dieser Übertrager eine Signal-Bezugsgröße überträgt und daß der andere dieser Übertrager eine sich in Abhängigkeit von den zu übertragenden Informationen relativ zur Bezugsgröße ändernde Größe überträgt.

# FIG 1

# FIG 2

## FIG 3